# EUROPEAN PATENT SPECIFICATION

(11) **EP 4 315 270 B1**
(45) Date of publication and mention of the grant of the patent: **06.05.2026**
(21) Application number: 22717047.9
(22) Date of filing: 17.03.2022
(51) Int. Cl.: G06V 10/44, G06V 10/762, G06V 10/764, G06V 10/77, G06V 10/772, G06V 20/40, G06V 10/74

(54) **MACHINE LEARNING MODEL BASED EMBEDDING FOR ADAPTABLE CONTENT EVALUATION**
AUF MASCHINENLERNMODELL BASIERENDE EINBETTUNG ZUR ANPASSBAREN INHALTSBEWERTUNG
INTÉGRATION BASÉE SUR UN MODÈLE D'APPRENTISSAGE MACHINE POUR UNE ÉVALUATION DE CONTENU ADAPTABLE

(30) Priority: 25.03.2021 US 202163165924 P; 16.03.2022 US 202217696329
(43) Date of publication of application: 07.02.2024
(60) Divisional application: 26167213.3
(73) Proprietor: Disney Enterprises, Inc., Burbank, CA 91521 (US)
(72) Inventor: DOGGETT, Erika, Varis, Burbank, CA 91521 (US); BEARD, Audrey Coyote, Aura, Burbank, CA 91521 (US); SCHROERS, Christopher, Richard, 8008 Zurich (CH); AZEVEDO, Robert Gerson de Albuquerque, 8008 Zurich (CH); LABROZZI, Scott, Burbank, CA 91521 (US); XUE, Yuanyi, Burbank, CA 91521 (US); ZIMMERMAN, James, Burbank, CA 91521 (US)
(74) Representative: Dr. Weitzel & Partner
(86) International application number: PCT/US2022/020746
(87) International publication number: WO 2022/203936

(56) References cited:
- YEN-CHANG HSU ET AL: "Deep Image Category Discovery using a Transferred Similarity Function", ARXIV.ORG, CORNELL UNIVERSITY LIBRARY, 201 OLIN LIBRARY CORNELL UNIVERSITY ITHACA, NY 14853, 5 December 2016 (2016-12-05), XP080736757
- HAN KAI ET AL: "Learning to Discover Novel Visual Categories via Deep Transfer Clustering", 2019 IEEE/CVF INTERNATIONAL CONFERENCE ON COMPUTER VISION (ICCV), IEEE, 27 October 2019 (2019-10-27), pages 8400 - 8408, XP033723601, DOI: 10.1109/ICCV.2019.00849
- SYLVESTRE-ALVISE REBUFFI ET AL: "LSD-C: Linearly Separable Deep Clusters", ARXIV.ORG, CORNELL UNIVERSITY LIBRARY, 201 OLIN LIBRARY CORNELL UNIVERSITY ITHACA, NY 14853, 17 June 2020 (2020-06-17), XP081698071
- KAI HAN ET AL: "Automatically Discovering and Learning New Visual Categories with Ranking Statistics", ARXIV.ORG, CORNELL UNIVERSITY LIBRARY, 201 OLIN LIBRARY CORNELL UNIVERSITY ITHACA, NY 14853, 13 February 2020 (2020-02-13), XP081599096

## Description

The present invention relates to a method for use with at least one machine learning model and a corresponding system for categorizing video content for video encoding.

Due to its nearly universal popularity as a content medium, ever more visual media content is being produced and made available to consumers. As a result, the efficiency with which visual images can be analyzed, classified, and processed has become increasingly important to the producers, owners, and distributors of that visual media content.

One significant challenge to the efficient classification and processing of visual media content is that entertainment and media studios produce many different types of content having differing features, such as different visual textures and movement. In the case of audio-video (AV) film and television content, for example the content produced may include live action content with realistic computer-generated imagery (CGI) elements, high complexity three-dimensional (3D) animation, and even two-dimensional (2D) hand-drawn animation. Moreover, each different type of content produced may require different treatment in pre-production, post-production, or both.

Consider, for example, the post-production treatment of AV or video content. Different types of AV or video content may benefit from different encoding schemes for streaming, or different workflows for localization. In the conventional art, the classification of content as being of a particular type is typically done manually, through human inspection, and in the example use case of video encoding, the most appropriate workflow may not be identifiable even after manual inspection, but may require trial and error to determine how to classify the content for encoding purposes. This classification process can be particularly challenging for mixed content types, such as animation embedded in otherwise live action content, or for visually complex 3D animation which may be better suited for post-processing using live action content workflows than traditional animation workflows.

State of the art disclosing methods and functions of image discovery and generating labels and clusters can be derived from the following:
YEN-CHANG HSU ET AL: "Deep Image Category Discovery using a Transferred Similarity Function", ARXIV.ORG, CORNELL UNIVERSITY LIBRARY, 201 OLIN LIBRARY CORNELL UNIVERSITY ITHACA, NY 14853, 5 December 2016 (2016-12-05), XP080736757;
HAN KAI ET AL: "Learning to Discover Novel Visual Categories via Deep Transfer Clustering", 2019 IEEE/CVF INTERNATIONAL CONFERENCE ON COMPUTER VISION (ICCV), IEEE, 27 October 2019 (2019-10-27), pages 8400-8408, XP033723601, DOI: 10.1109/ICCV.2019.00849;
SYLVESTRE-ALVISE REBUFFI ET AL: "LSD-C: Linearly Separable Deep Clusters", ARXIV.ORG, CORNELL UNIVERSITY LIBRARY, 201 OLIN LIBRARY CORNELL UNIVERSITY ITHACA, NY 14853, 17 June 2020 (2020-06-17), XP081698071; and
KAI HAN ET AL: "Automatically Discovering and Learning New Visual Categories with Ranking Statistics", ARXIV.ORG, CORNELL UNIVERSITY LIBRARY, 201 OLIN LIBRARY CORNELL UNIVERSITY ITHACA, NY 14853, 13 February 2020 (2020-02-13), XP081599096.

The present invention is defined by a method with the features of claim 1 and a system with the features of claim 10. The dependent claims describe preferred embodiments.
Figure 1 shows a diagram of an exemplary system for performing machine learning (ML) model based embedding for adaptable content evaluation, according to one implementation;
Figure 2A shows a diagram illustrating an exemplary training process for an ML model suitable for use in the system of Figure 1, according to one implementation;
Figure 2B shows a diagram illustrating an exemplary training process for an ML model suitable for use in the system of Figure 1, according to another implementation;
Figure 3A shows an exemplary two-dimensional (2D) subspace of a continuous multi-dimensional vector space including embedded vector representations of content with respect to a particular similarity metric, according to one implementation;
Figure 3B shows the subspace of Figure 3A including clusters of embeddings, each cluster identifying a different category of content with respect to the similarity metric on which the mapping of Figure 3A is based, according to one implementation; and
Figure 4 shows a flowchart describing an exemplary method for performing ML model based embedding for adaptable content evaluation, according to one implementation.

The following description contains specific information pertaining to implementations in the present disclosure. One skilled in the art will recognize that the present disclosure may be implemented in a manner different from that specifically discussed herein. The drawings in the present application and their accompanying detailed description are directed to merely exemplary implementations. Unless noted otherwise, like or corresponding elements among the figures may be indicated by like or corresponding reference numerals. Moreover, the drawings and illustrations in the present application are generally not to scale, and are not intended to correspond to actual relative dimensions.

As noted above, entertainment and media studios produce many different types of content having differing features, such as different visual textures and movement. In the case of audio-video (AV) or video content, for example the content produced may include live action content with realistic computer-generated imagery (CGI) elements, high complexity three-dimensional (3D) animation, and even two-dimensional (2D) hand-drawn animation. Each different type of content produced may require different treatment in pre-production, post-production, or both.

As further noted above, in the post-production treatment of AV or video content, different types of video content may benefit from different encoding schemes for streaming, or different workflows for localization. In the conventional art, the classification of content as being of a particular type is done manually, through human inspection, and in the example use case of video encoding, the most appropriate workflow may not be identifiable even after manual inspection, but may require trial and error to determine how to categorize the content for encoding purposes. This classification process can be particularly challenging for mixed content types, such as animation embedded in otherwise live action content, or for visually complex 3D animation which may be better suited for post-processing using live action content workflows than traditional animation workflows.

The present application discloses systems and methods for performing machine learning (ML) model based embedding for adaptable content evaluation. It is noted that the disclosure provided in the present application focuses on optimizations within the encoding pipeline for video streaming. Examples of tasks under consideration include 1) selection of pre- and post-processing algorithms or algorithm parameters, 2) automatic encoding parameter selection per title or per segment, and 3) automatic bitrate ladder selection for adaptive streaming per title or per segment. However, the present ML model based adaptable evaluation solution is task-independent and can be used in contexts that are different from those specifically described herein.

Thus, although the present adaptable content evaluation solution is described below in detail by reference to the exemplary use case of video encoding in the interests of conceptual clarity, the present novel and inventive principles may more generally be utilized in a variety of other content post-production processes, such as colorization, color correction, content restoration, mastering, and audio cleanup or synching, to name a few examples, as well as in pre-production processing. Moreover, the adaptable content evaluation solution disclosed in the present application may advantageously be implemented as an automated process.

As defined in the present application, the terms "automation," "automated," and "automating" refer to systems and processes that do not require human intervention. Although in some implementations a human editor may review the content evaluations performed by the systems and using the methods described herein, that human involvement is optional. Thus, the methods described in the present application may be performed under the control of hardware processing components of the disclosed automated systems.

Moreover, as defined in the present application, the expression "ML model" may refer to a mathematical model for making future predictions based on patterns learned from samples of data or "training data." Various learning algorithms can be used to map correlations between input data and output data. These correlations form the mathematical model that can be used to make future predictions on new input data. Such a predictive model may include one or more logistic regression models, Bayesian models, or neural networks (NNs).

A "deep neural network," in the context of deep learning, may refer to an NN that utilizes a plurality of hidden layers between input and output layers, which may allow for learning based on features not explicitly defined in raw data. As used in the present application, a feature identified as an NN refers to a deep neural network.

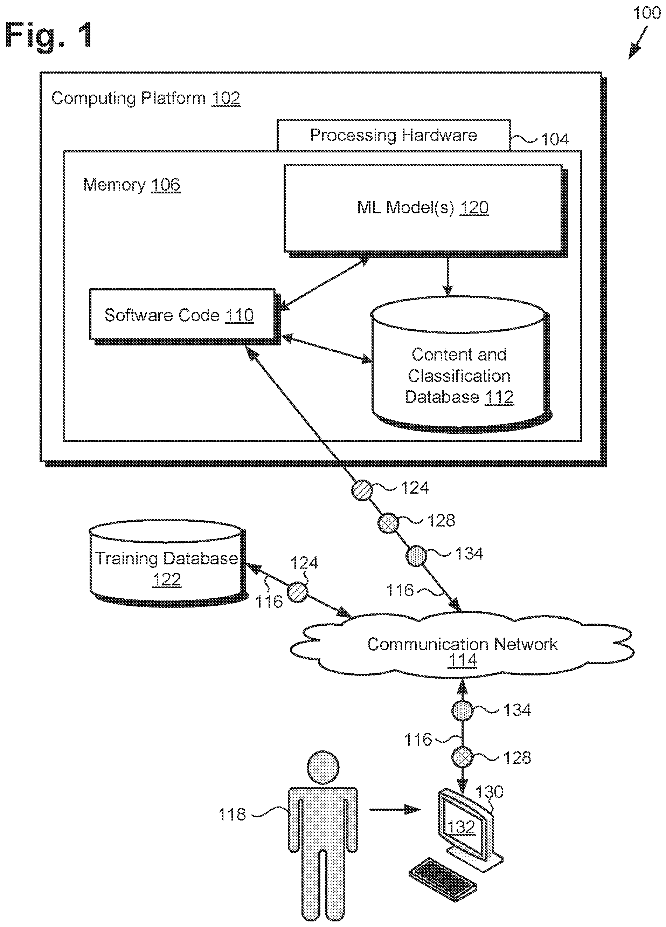

Figure 1 shows system 100 for performing machine learning model based embedding for adaptable content evaluation, according to one exemplary implementation. As shown in Figure 1, system 100 includes computing platform 102 having processing hardware 104 and system memory 106 implemented as a computer-readable non-transitory storage medium. According to the present exemplary implementation, system memory 106 stores software code 110, one or more ML models 120 (hereinafter "ML model(s) 120"), and content and classification database 112 storing category assignments determined by ML model(s) 120.

As further shown in Figure 1, system 100 is implemented within a use environment including communication network 114 providing network communication links 116, training database 122, user system 130 including display 132, and user 118 of user system 130. Also shown in Figure 1 are training data 124, input data 128, and content classification 134 for input data 128, determined by system 100. It is noted that although the exemplary use case for system 100 described below refers to system 110 as performing a classification of input data 128, in some implementations system 100 may perform a regression on content 100 rather than a classification, as those processes are known to be distinguishable in the art.

Although the present application refers to one or more of software code 110, ML model(s) 120, and content and classification database 112 as being stored in system memory 106 for conceptual clarity, more generally, system memory 106 may take the form of any computer-readable non-transitory storage medium. The expression "computer-readable non-transitory storage medium," as defined in the present application, refers to any medium, excluding a carrier wave or other transitory signal that provides instructions to processing hardware 104 of computing platform 102. Thus, a computer-readable non-transitory storage medium may correspond to various types of media, such as volatile media and non-volatile media, for example. Volatile media may include dynamic memory, such as dynamic random access memory (dynamic RAM), while non-volatile memory may include optical, magnetic, or electrostatic storage devices. Common forms of computer-readable non-transitory storage media include, for example, optical discs, RAM, programmable read-only memory (PROM), erasable PROM (EPROM), and FLASH memory.

Moreover, although Figure 1 depicts software code 110, ML model(s) 120, and content and classification database 112 as being co-located in system memory 106, that representation is also merely provided as an aid to conceptual clarity. More generally, system 100 may include one or more computing platforms 102, such as computer servers for example, which may be co-located, or may form an interactively linked but distributed system, such as a cloud-based system, for instance. As a result, processing hardware 104 and system memory 106 may correspond to distributed processor and memory resources within system 100. Consequently, in some implementations, one or more of software code 110, ML model(s) 120, and content and classification database 112 may be stored remotely from one another on the distributed memory resources of system 100. It is also noted that, in some implementations, ML model(s) 120 may take the form of one or more software modules included in software code 110.

Furthermore, although Figure 1 shows training database 122 to be remote from system 100, that representation is also merely by way of example. In some implementations, training database 122 may be included as a feature of system 100, and may be stored in system memory 106.

Processing hardware 104 may include a plurality of hardware processing units, such as one or more central processing units, one or more graphics processing units, and one or more tensor processing units one or more field-programmable gate arrays (FPGAs), and an application programming interface (API) server, for example. By way of definition, as used in the present application, the terms "central processing unit" (CPU), "graphics processing unit" (GPU), and "tensor processing unit" (TPU) have their customary meaning in the art. That is to say, a CPU includes an Arithmetic Logic Unit (ALU) for carrying out the arithmetic and logical operations of computing platform 102, as well as a Control Unit (CU) for retrieving programs, such as software code 110, from system memory 106, while a GPU may be implemented to reduce the processing overhead of the CPU by performing computationally intensive graphics or other processing tasks. A TPU is an application-specific integrated circuit (ASIC) configured specifically for artificial intelligence (AI) processes such as machine learning.

In some implementations, computing platform 102 may correspond to one or more web servers, accessible over communication network 114 in the form of a packet-switched network such as the Internet, for example. Moreover, in some implementations, communication network 114 may be a high-speed network suitable for high performance computing (HPC), for example a 10 GigE network or an Infiniband network. In some implementations, computing platform 102 may correspond to one or more computer servers supporting a private wide area network (WAN), local area network (LAN), or included in another type of limited distribution or private network. As yet another alternative, in some implementations, system 100 may be implemented virtually, such as in a data center. For example, in some implementations, system 100 may be implemented in software, or as virtual machines.

Although user system 130 is shown as a desktop computer in Figure 1, that representation is provided merely as an example as well. More generally, user system 130 may be any suitable mobile or stationary computing device or system that includes display 132 and implements data processing capabilities sufficient to provide a user interface, support connections to communication network 114, and implement the functionality ascribed to user system 130 herein. For example, in other implementations, user system 130 may take the form of a laptop computer, tablet computer, or smartphone, for example.

With respect to display 132 of user system 130, display 132 may be implemented as a liquid crystal display (LCD), light-emitting diode (LED) display, organic light-emitting diode (OLED) display, quantum dot (QD) display, or any other suitable display screen that perform a physical transformation of signals to light. Furthermore, display 132 may be physically integrated with user system 130 or may be communicatively coupled to but physically separate from user system 130. For example, where user system 130 is implemented as a smartphone, laptop computer, or tablet computer, display 132 will typically be integrated with user system 130. By contrast, where user system 130 is implemented as a desktop computer, display 132 may take the form of a monitor separate from user system 130 in the form of a computer tower.

Input data 128, as well as training data 124, may include segmented content in the form of video snippets (e.g., sampling of frames), including raw frames, encoded frames, or both. In addition, in some implementations, input data 128, training data 124, or both, may be augmented with additional data, such as one or more of encoding statistics, distortion maps or metrics, pre-computed features such as per-pixel noise or texture information, for example, or any combination thereof. Thus, in various implementations, input data 128 and training content 124 may be 3D (e.g., in the case of video), 2D (e.g., in case of individual frames), 1D (e.g., in case of per-frame values), or even single variable for a segment.

In the case of AV or video content, input data 128 and training data 124 may include content segmented by shot, scene, timecode interval, or as individual video frames. Regarding the term "shot," as defined for the purposes of the present application, a "shot" refers to a continuous series of video frames that are captured from a unique camera perspective without cuts and other cinematic transitions, while a scene typically includes a plurality of shots. Alternatively, input data 128 and training data 124 may include content segmented using the techniques described in U.S. Patent Application Publication Number 2021/0076045, published on March 11, 2021, and titled "Content Adaptive Boundary Placement for Distributed Encodes" It is noted that, in various implementations, input data 128 and training data 124 may include video content without audio, audio content without video, AV content, text, or content having any other format.

ML model(s) 120 include an ML model based embedder trained using training data 124 that is selected based on one or more similarity metrics. Such similarity metrics may be metrics that are quantitatively similar, i.e., objectively similar, or may be metrics that are perceptually similar, i.e., subjectively similar under human inspection. Examples of perceptual similarity metrics for AV and video content may include texture, motion, and perceived encoding quality, to name a few. Examples of quantitative similarity metrics for AV and video content may include rate distortion curves, pixel density, computed optical flow, and computed encoding quality, also to name merely a few.

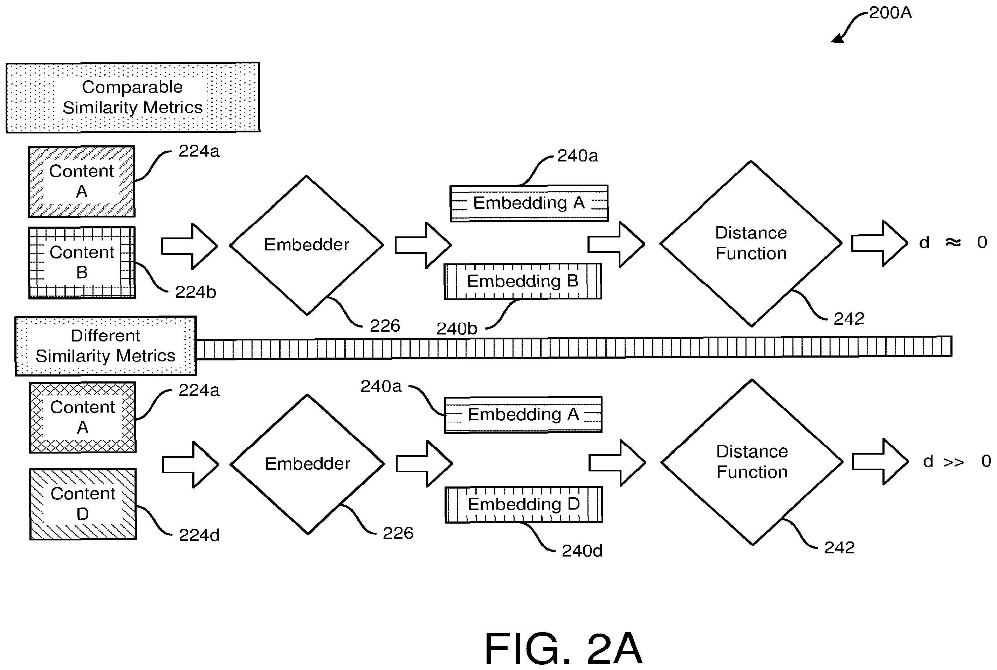

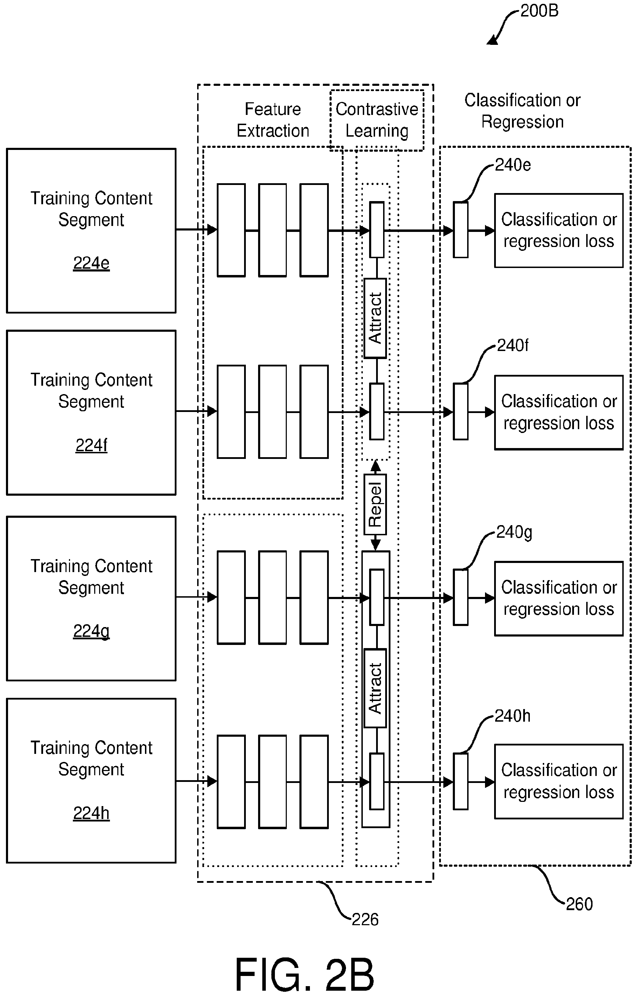

Referring to Figures 2A and 2B, Figure 2A shows diagram 200A illustrating an exemplary contrastive learning process for training ML model based embedder 226 included among ML model(s) 120, according to one implementation, while Figure 2B shows diagram 200B illustrating an exemplary contrastive learning process for training ML model based embedder 226, according to another implementation.

As shown in Figure 2A, in addition to ML model based embedder 226, diagram 200A includes training content segment 224a, training content segment 224b having a similarity metric with a value comparable to the value of the same similarity metric for training content segment 224a, and training content segment 224d having a similarity metric with a value that is different than the value of the same similarity metric for training content segment 224a. In addition, Figure 2A shows embedding 240a of training content segment 224a, embedding 240b of training content segment 224b, and embedding 240d of training content segment 224d. Also shown in Figure 2A is distance function 242 comparing embeddings 240a and 240b, and comparing embeddings 240a and 240d. It is noted that training content segments 224a, 224b, and 224d correspond in general to training data 124, in Figure 1.

As shown in Figure 2A, ML model based embedder 226 is trained using a contrastive learning process to identify training content segments 224a and 224b as similar while minimizing distance function 242. As further shown in Figure 2A, ML model based embedder 226 is also trained using the contrastive learning process to identify training content segments 224a and 224d as dissimilar while maximizing distance function 242.

As shown in Figure 2B, in addition to ML model based embedder 226, diagram 200B includes training content segment 224e, training content segment 224f having a similarity metric with a value comparable to the value of the same similarity metric for training content segment 224e, training content segment 224g having a similarity metric different than the values of the same similarity metric for training content segments 224e and 224f, and training content segment 224h having a similarity metric with a value that is comparable to the value of the same similarity metric for training content segment 224g but different than the values of the same similarity metric for training content segments 224e and 224f. In addition, Figure 2B shows embedding 240e of training content segment 224e, embedding 240f of training content segment 224f, embedding 240g of training content segment 224g, and embedding 240h of training content segment 224h. Also shown in Figure 2B is classification or regression block 260 configured to perform one of a classification or a regression, respectively, of embeddings 240e, 240f, 240g, and 240h received from ML model based embedder 226. It is noted that training content segments 224e, 224f, 224g, and 224h correspond in general to training data 124, in Figure 1.

ML model based embedder 226 is responsible for mapping content segments to embeddings. Example implementations for ML model based embedder 226 include but are not restricted to one or more of a 1D, 2D, or 3D convolutional neural network (CNN) with early or late fusion, that is/are trained from scratch or is/are pre-trained to leverage transfer learning. Depending on the target task, features extracted from different layers of a pre-trained CNN, such as the last layer of a Visual Geometry Group (VGG) CNN or Residual Network (ResNet) might be used to shape the embedding.

Classification or regression block 260 is responsible for performing classification or regression tasks, such as selection of pre-processing or post-processing algorithms or parameters, rate-distortion prediction where distortion can be measured with various quality metrics, per title or per segment automatic encoding parameter selection, and per title or per segment automatic bitrate ladder selection for adaptive streaming prediction of the highest bitrate a given title or segment needs to be encoded in to reach a certain perceptual quality, to name a few examples.

Classification or regression block 260 can be implemented as, for instance a similarity metric plus threshold to determine what cluster of embeddings a particular embedding belongs to among different cluster groups available in a continuous vector space into which the embeddings are mapped. Alternatively, classification or regression block 260 can be implemented as a neural network (NN) or other ML model architecture included among ML model(s) 120 that is trained to classify or regress the embedding to the ground truth result. Moreover, in some implementations, classification or regression block 260 may be integrated with ML model based embedder 226, and may serve as one or more layers of ML model based embedder 226, for example.

The contrastive learning processes depicted in Figures 2A and 2B may be repeated on a corpus of similar and dissimilar training content segment pairs. **In** the use case in which the content being categorized is AV or video content, for example, similar training content segments may both be live action segments or hand-painted animations, while each of dissimilar training content segments may be a different one of those two video content types. **In** the specific use case of video encoding, content segments can be labeled as similar for training purposes based on both having performed well (according to a performance threshold) on a particular encoding schema, regardless of whether one segment includes live action content and the other includes animation. In that use case, training content segments may be labeled dissimilar if they perform well on different encoding schemas even though they share the same content type, e.g., live action or animation.

The training of ML model based embedder 226, classification or regression block 260, or both ML model based embedder 226 and classification or regression block 260, may be performed by software code 110, executed by processing hardware 104 of computing platform 102. In some use cases, ML model based embedder 226 and classification or regression block 260 may be trained independently of one another.

Alternatively, in some implementations, ML model based embedder 226 may be trained first, and then the embeddings provided by ML model based embedder 226 may be used for different downstream classification or regression tasks. In such a case, ML model based embedder 226 may be trained by a) identifying content segments that are deemed similar, and feed them in as training data while minimizing a distance function between them, b) identifying two content segments that are deemed dissimilar, and feed them in as training while maximizing a distance function between them, and c) repeating steps a) and b) for the length of the training.

As yet another alternative, in some implementations ML model based embedder 226 and classification or regression block 260 may be trained together. Moreover, in some implementations in which ML model based embedder 226 and classification or regression block 260 are trained together, such as where classification or regression block 260 is integrated with ML model based embedder 226 as one or more layers of ML model based embedder 226, for example, ML model based embedder 226 including classification or regression block 260 may be trained using end-to-end learning.

After training of ML model based embedder 226, classification or regression block 228, or both ML model based embedder 226 and classification or regression block 260, is complete, processing hardware 104 may execute software code 110 to receive input data 128 from user system 130, and to use ML model based embedder 226 to transform input data 128 or segments thereof to a vector representation (hereinafter "embedding") of the content mapped into a continuous one dimensional or multi-dimensional vector space, resulting in an embedded vector representation of the content in that vector space.

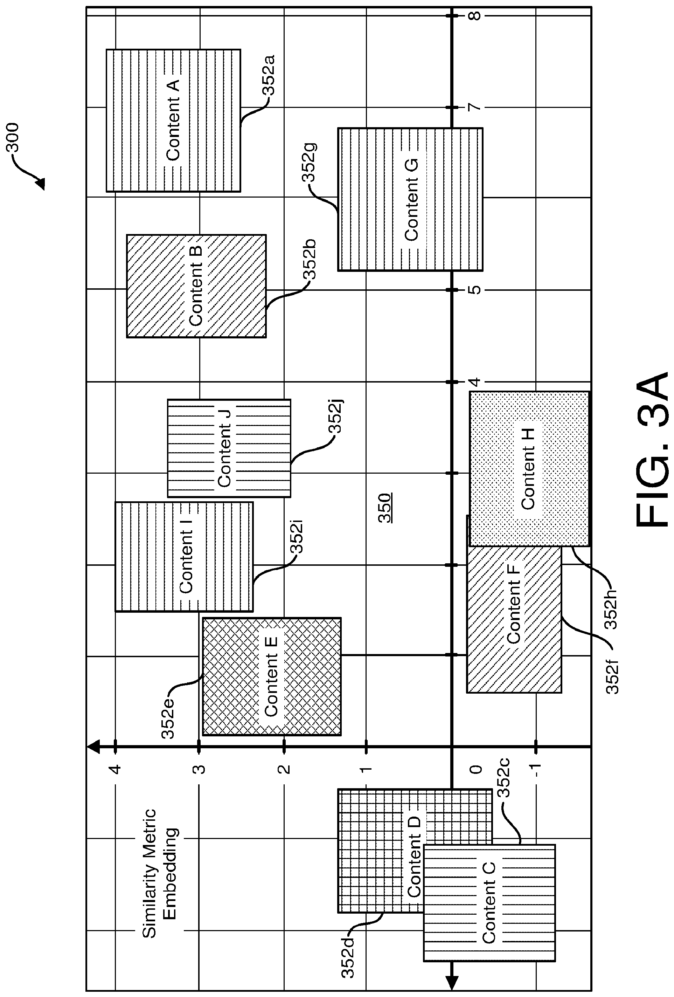

Figure 3A shows exemplary 2D subspace 300 of continuous multi-dimensional vector space 350, according to one implementation. It is noted that continuous multi-dimensional vector space 350 may be a relatively low dimension space, such as a sixty-four (64), one hundred and twenty-eight (128), or two hundred and fifty-six (256) dimension space, for example. Alternatively, in some implementations, continuous multi-dimensional vector space 350 may be a relatively high dimension space having tens of thousands of dimensions, such as twenty thousand (20k) dimensions, for example. Also shown in Figure 3A are mapped embeddings 352a, 352b, 352c, 352d, 352e, 352f, 352g, 352h, 352i, and 352j (hereinafter "embeddings 352a-352j") in continuous multi-dimensional vector space 350 and each corresponding to a different sample of content included in input data 128, in Figure 1.

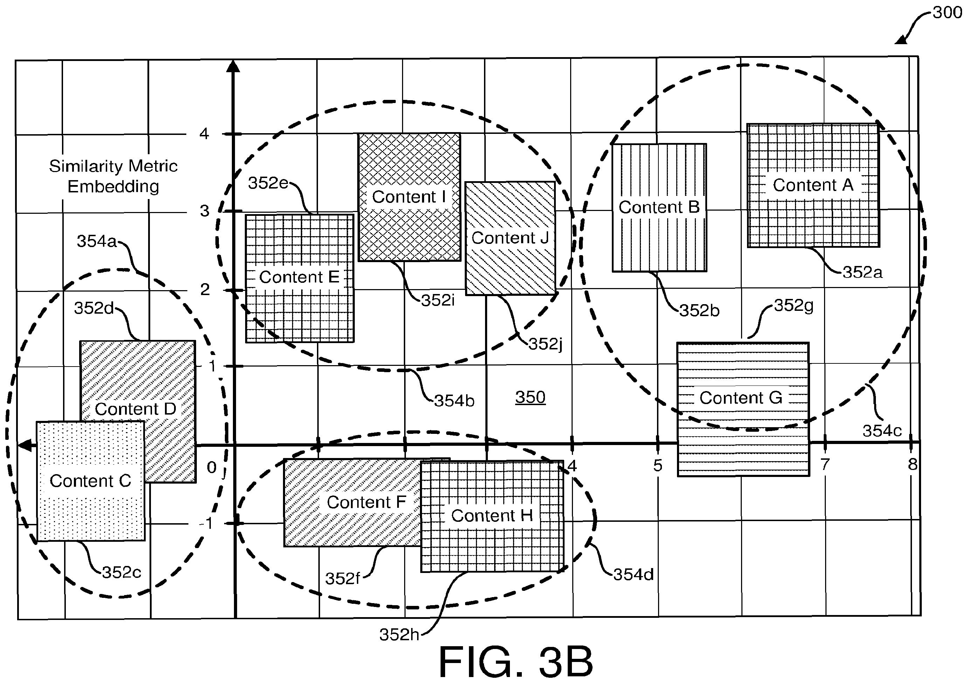

In addition to using ML model based embedder 226 to map embeddings 352a-352j onto continuous multi-dimensional vector space 350, software code 110, when executed by processing hardware 104, may further perform an unsupervised clustering process to identify clusters each corresponding respectively to a different content category with respect to the similarity metric being used to compare content. Figure 3B shows subspace 300 of continuous multi-dimensional vector space 350 including embeddings 352a-352j. Figure 3B also shows distinct clusters 354a, 354b, 354c, and 354d (hereinafter "clusters 354a-354d"), each of which identifies a different category of content with respect to a particular similarity metric.

In the case of AV and video content, for example embeddings 352a and 352b of live action content are mapped to a region of multi-dimensional vector space 350 identified by cluster 354c, while embeddings 352c, 352d, 352f, and 352h of low complexity animation content such as hand-drawn and other two-dimensional (2D) animation are mapped to different regions of continuous multi-dimensional vector space 350 identified by clusters 354a and 354d. Embeddings 352e, 352i, and 352j of high complexity animation content such as 3D animation is shown to be mapped to yet a different region of continuous multi-dimensional vector space 350 identified by cluster 354b. It is noted that embedding 352g of a mixed content type, such as animation mixed with live action, for example, may be mapped to the border of either an animation cluster, a live action cluster, or between such clusters.

In use cases in which the content corresponding to embeddings 352a-352j is AV or video content and the process for which that content is being categorized is video encoding, for example, each of clusters 354a-354d may correspond to a different codec. For instance cluster 354c may identify content for which a high bit-rate codec is required, while cluster 354a may identify content for which a low bit-rate codec is sufficient. Clusters 354b and 354d may identify content with other specific codecs. In one such implementation in which a new codec is introduced or an existing codec is retired, system 100 may be configured to automatically re-evaluate embeddings 352a-352j relative to the changed group of available codecs. An analogous re-evaluation may be performed for any other process to which the present concepts are applied.

It is noted that the continuity of multi-dimensional vector space 350 advantageously enables adjustment of the way in which embedding corresponding to content are clustered into categories per individual use case through utilization of different clustering algorithms and thresholds. In contrast to conventional classifications methods, which depend on a priori knowledge of the number of classification labels to be trained for, the present novel and inventive embedding approach can be adaptably used for a plurality of classification schemes. Moreover, due to the unsupervised nature of the clustering performed as part of the present adaptable content evaluation solution, the approach disclosed in the present application can yield unanticipated insights into similarities among items of content that may appear superficially to be different.

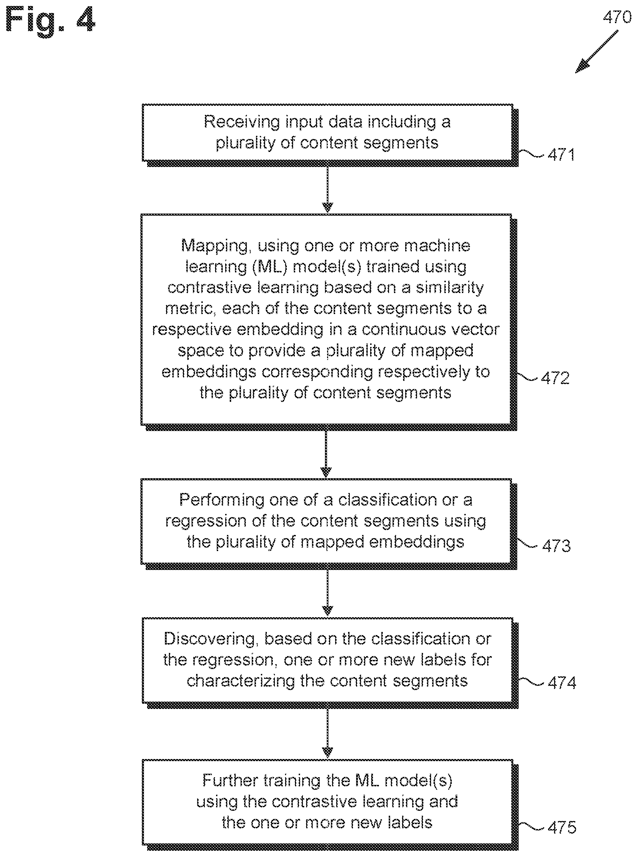

The functionality of system 100 will be further described by reference to Figure 4. Figure 4 shows flowchart 470 presenting an exemplary method for performing ML model based embedding for adaptable content evaluation, according to one implementation. With respect to the method outlined in Figure 4, it is noted that certain details and features have been left out of flowchart 470 in order not to obscure the discussion of the inventive features in the present application.

Referring now to Figure 4 in combination with Figure 1, flowchart 470 includes receiving input data 128 including a plurality of content segments (action 471). As shown in Figure 1, input data 128 may be received by system 100 from user system 130, via communication network 114 and network communication links 116. As discussed above, input data 128 may include video content without audio, where the video content includes raw frames, encoded frames, or both. Alternatively, input data 128 may include audio content without video, AV content, text, or content having any other format. As further discussed above, in some implementations, input data 128 may also include one or more of encoding statistics, distortion maps or metrics, pre-computed features such as per-pixel noise or texture information, or any combination thereof. Input data 128 may be received in action 471 by software code 110, executed by processing hardware 104 of computing platform 102.

Referring to Figures 2A, 2B, and 3A in combination with Figures 1 and 4, flowchart 470 further includes mapping, using an ML model based embedder included among ML model(s) 120, each of the plurality of content segments received in action 471 to a respective embedding in continuous vector space 350 to provide a plurality of mapped embeddings (e.g., embeddings 352a-352j) corresponding respectively to the plurality of content segments (action 472). The mapping of the plurality of content segments received in action 471 to embeddings in continuous vector space 350 may be performed in action 472 by software code 110, executed by processing hardware 104 of computing platform 102, and using ML model based embedder 226.

As discussed above, ML model based embedder 226 may be trained using contrastive learning based on one or more similarity metrics. As also discussed above, the one or more similarity metrics on which contrastive learning by ML model based embedder 226 may include a quantitative similarity metric, a perceptual similarity metric, or both. In some implementations, as noted above, ML model based embedder 226 may include one or more of a 1D CNN, a 2D CNN, or a 3D CNN, for example, with early or late fusion. Furthermore, with respect to continuous vector space 350, it is noted that in some implementations continuous vector space 350 may be multi-dimensional, as shown in Figure 3A, as well as in Figure 3B.

Flowchart 470 further includes performing one of a classification or a regression of the content segments using mapped embeddings (e.g., embeddings 352a-352j) (action 473). **In** some implementations, as described above by reference to Figure 3B, a classification performed in action 473 may include grouping each of at least one of mapped embeddings (e.g., embeddings 352a-352j) into one or more clusters (e.g., clusters 354a-354d), each corresponding respectively to a distinct category of the similarity metric upon which the contrastive learning by ML model based embedder 226 is based. As further described above, such clustering may be performed as an unsupervised process.

As also discussed above, in some implementations, the classification or regression performed in action 473 may be performed using classification or regression block 260, which may take the form of a trained neural network (NN) or other ML model architecture included among ML model(s) 120. Moreover and as further discussed above, in some implementations, classification or regression block 260 may be integrated with ML model based embedder 226, and may serve as one or more layers of ML model based embedder 226, for example. Action 473 may be performed by software code 110, executed by processing hardware 104 of computing platform 102, and in some implementations, using classification or regression block 260.

Flowchart 470 further includes discovering, based on the one of the classification or the regression performed in action 473, at least one new label for characterizing the plurality of content segments received in action 471 (action 474). For example, and as described above by reference to Figure 3B, due to the unsupervised nature of the clustering performed as part of the present adaptable content evaluation solution, the method outlined by flowchart 470 can yield unanticipated insights into similarities among items of content that may appear superficially to be different. The at least one new label discovered in action 474 may be stored in content and classification database 112. **In** addition, or alternatively, that at least new label discovered in action 474 may be transferred to training database 122 for storage and inclusion in training data 124.

For example, the at least one new label discovered in action 474 may advantageously result in implementation of new, and more effective, AV or video encoding parameters. In addition, or alternatively, information discovered as part of action 474 may be used to selectively enable one or more presently unused encoding parameters, as well as to selectively disable one or more encoding parameters presently in use. As yet another example, the information discovered as part of action 474 may be used to selectively turn-on or turn-off certain preprocessing elements in the transcoding pipeline, such as denoising or debanding, for example, based on content characteristics. Action 474 may be performed by software code 110, executed by processing hardware 104 of computing platform 102.

In some implementations, the method outlined by flowchart 470 may conclude with action 474 described above. However, in other implementations, the method outlined by flowchart 470 may also include further training ML model based embedder 226 using contrastive learning and the at least one new label discovered in action 474 (action 475). That is to say, action 475 is optional. When included in the method outlined by flowchart 470, action 475 may be performed by software code 110, executed by processing hardware 104 of computing platform 102, and may advantageously result in refining and improving the future classification or regression performance of system 100. With respect to the actions included in flowchart 470, it is noted that actions 471, 472, 473, and 474 (hereinafter "actions 471-474"), or actions 471-474 and 475, may be performed as an automated process from which human involvement may be omitted.

Thus, the present application discloses systems and methods for performing ML model based embedding for adaptable content evaluation. The solution disclosed in the present application advances the state-of-the-art by addressing and providing solutions for situations in which a downstream task lacks annotated clear labeling, but it is desirable to discover how and why different things are responding differently to this task. The novel and inventive concepts disclosed in the present application can be used to automate the process of discovering appropriate labels for these differences (auto-discovery), and to be able to train a model so that a prediction can be generated about which one of those different groupings something is going to fall into, given a particular set of parameters for that downstream task.

As described above, the present application discloses two approaches to addressing the problem of auto-discovery of labels that can build on each other. **In** the first approach, as described by reference to Figures 2A, 3A, and 3B, a contrastive learning approach is adopted. Embeddings are mapped to a continuous vector space, and then an unsupervised clustering analysis is performed to discover what different groupings there may be and what additional unanticipated groupings there may be. This first approach may be refined by adding more signals to the data used to create the continuous vector space to which the embeddings are mapped, to provide a more complex vector space that is sensitive to more factors and that will do more different kinds of groupings.

**In** the second approach, the first approach described above may be further supplemented by adding a classification or regression block for different types of downstream tasks, as described above by reference to Figure 2B. **In** that implementation, the ML model based embedder and the classification or regression block, which can be implemented as a neural network (NN), may be trained together using end-to-end learning while preserving the auto-discovery of labels that is so advantageously enabled by the present systems and methods.

From the above description it is manifest that various techniques can be used for implementing the concepts described in the present application without departing from the scope of the appended claims.

Moreover, while the concepts have been described with specific reference to certain implementations, a person of ordinary skill in the art would recognize that changes can be made in form and detail without departing from the scope of the appended claims.

As such, the described implementations are to be considered in all respects as illustrative and not restrictive. It should also be understood that the present application is not limited to the particular implementations described herein, but many rearrangements, modifications, and substitutions are possible without departing from the scope of the present claims.

## Claims

1. A method for use with at least one machine learning, ML, model (120) trained using contrastive learning based on a similarity metric to map each of a plurality of video segments (224) to a respective embedding (240, 352) in a continuous vector space (350) , wherein the similarity metric is a video encoding metric, and the ML model (120) is trained to label a pair of video segments (224) as similar based on both having performed well on a particular encoding schema and as dissimilar based on both having performed well on different encoding schemas, the method comprising:
receiving an input (128) including the plurality of video segments (224);
mapping, using the at least one ML model (120), each of the plurality of video segments (224) to the respective embedding (240, 352) in the continuous vector space (350) to provide a plurality of mapped embeddings (240, 352) corresponding respectively to the plurality of video segments (224);
performing one of a classification or a regression of the plurality of video segments (224) using the plurality of mapped embeddings (240, 352);
classifying, based on the one of the classification or the regression, the plurality of video segments (224) into a video content category among a plurality of video content categories with respect to the similarity metric;
determining an encoding schema corresponding to the video content category;
and
encoding the plurality of video segments (224) using the encoding schema .

2. The method of claim 1, wherein the classification comprises grouping each of at least one of the plurality of mapped embeddings (240, 352) into one or more clusters (354) each corresponding respectively to a distinct category of the similarity metric.

3. The method of claim 2, further comprising:
selecting, based on the video content category, a pre-processing algorithm for pre-processing the plurality of video segments (224); and
pre-processing the plurality of video segments (224) using the selected pre-processing algorithm.

4. The method of claim 1, wherein the at least one ML model (120) comprises at least one of a one-dimensional convolutional neural network, a two-dimensional convolutional neural network, or a three-dimensional convolutional neural network.

5. The method of claim 1, wherein the continuous vector space (350) is multi-dimensional.

6. The method of claim 1, wherein the similarity metric comprises one of a quantitative similarity metric or a perceptual similarity metric.

7. The method of claim 1, wherein the one of the classification or the regression is performed using a respective one of a trained classification ML model (120) or a trained regression ML model (120), and wherein the at least one ML model (120) and the respective one of the trained classification ML model (120) or the trained regression ML model (120) are trained independently of one another.

8. The method of claim 1, wherein the one of the classification or the regression is performed using a respective one of a trained classification ML model (120) or a trained regression ML model (120), and wherein the respective one of the trained classification ML model (120) or the trained regression ML model (120) comprises a trained neural network, NN.

9. The method of claim 1, wherein the one of the classification or the regression is performed using a respective one of a classification block or a regression block of the at least one ML model (120), and wherein the at least one ML model (120) including the respective one of the classification block or the regression block and the trained NN is trained using end-to-end learning.

10. A system (100) comprising a processing hardware (104) and a memory (106) storing a software code (110), **characterized by**:
the processing hardware (104) adapted to execute the software code (110) to perform the method of any of claims 1 to 9.

## Patentansprüche

1. Verfahren zur Verwendung mit mindestens einem Modell (120) für maschinelles Lernen, ML, das unter Verwendung von kontrastivem Lernen auf Grundlage einer Ähnlichkeitsmetrik trainiert wird, um jedes einer Vielzahl von Videosegmenten (224) einer jeweiligen Einbettung (240, 352) in einem stetigen Vektorraum (350) zuzuordnen, wobei die Ähnlichkeitsmetrik eine Videocodierungsmetrik ist und das ML-Modell (120) trainiert wird, um ein Paar von Videosegmenten (224) auf Grundlage dessen, dass beide eine gute Leistung bei einem bestimmten Codierungsschema erbracht haben, als ähnlich und auf Grundlage dessen, dass beide eine gute Leistung bei unterschiedlichen Codierungsschemata erbracht haben, als unähnlich zu beschriften, wobei das Verfahren Folgendes umfasst:
Empfangen einer Eingabe (128), welche die Vielzahl von Videosegmenten (224) beinhaltet;
Zuordnen, unter Verwendung des mindestens einen ML-Modells (120), jedes der Vielzahl von Videosegmenten (224) zu der jeweiligen Einbettung (240, 352) in dem stetigen Vektorraum (350), um eine Vielzahl von zugeordneten Einbettungen (240, 352) bereitzustellen, die jeweils der Vielzahl von Videosegmenten (224) entsprechen;
Durchführen eines von einer Klassifizierung oder einer Regression der Vielzahl von Videosegmenten (224) unter Verwendung der Vielzahl von zugeordneten Einbettungen (240, 352);
Klassifizieren, auf Grundlage des einen von der Klassifizierung oder der Regression, der Vielzahl von Videosegmenten (224) in eine Videoinhaltskategorie unter einer Vielzahl von Videoinhaltskategorien in Bezug auf die Ähnlichkeitsmetrik;
Bestimmen eines Codierungsschemas, das der Videoinhaltskategorie entspricht;
und
Codieren der Vielzahl von Videosegmenten (224) unter Verwendung des Codierungsschemas.

2. Verfahren nach Anspruch 1, wobei die Klassifizierung Gruppieren jeder von mindestens einer der Vielzahl von zugeordneten Einbettungen (240, 352) in einem oder mehreren Clustern (354), die jeweils einer unterschiedlichen Kategorie der Ähnlichkeitsmetrik entsprechen, umfasst.

3. Verfahren nach Anspruch 2, ferner umfassend:
Auswählen, auf Grundlage der Videoinhaltskategorie, eines Vorverarbeitungsalgorithmus zum Vorverarbeiten der Vielzahl von Videosegmenten (224); und
Vorverarbeiten der Vielzahl von Videosegmenten (224) unter Verwendung des ausgewählten Vorverarbeitungsalgorithmus.

4. Verfahren nach Anspruch 1, wobei das mindestens eine ML-Modell (120) mindestens eines von einem eindimensionalen neuronalen Faltungsnetz, einem zweidimensionalen neuronalen Faltungsnetz oder einem dreidimensionalen neuronalen Faltungsnetz umfasst.

5. Verfahren nach Anspruch 1, wobei der stetige Vektorraum (350) mehrdimensional ist.

6. Verfahren nach Anspruch 1, wobei die Ähnlichkeitsmetrik eines von einer quantitativen Ähnlichkeitsmetrik oder einer perzeptuellen Ähnlichkeitsmetrik umfasst.

7. Verfahren nach Anspruch 1, wobei das eine von der Klassifizierung oder der Regression unter Verwendung eines jeweiligen von einem trainierten Klassifizierungs-ML-Modell (120) oder einem trainierten Regressions-ML-Modell (120) durchgeführt wird und wobei das mindestens eine ML-Modell (120) und das jeweilige von dem trainierten Klassifizierungs-ML-Modell (120) oder dem trainierten Regressions-ML-Modell (120) unabhängig voneinander trainiert werden.

8. Verfahren nach Anspruch 1, wobei das eine von der Klassifizierung oder der Regression unter Verwendung eines jeweiligen von einem trainierten Klassifizierungs-ML-Modell (120) oder einem trainierten Regressions-ML-Modell (120) durchgeführt wird und wobei das jeweilige von dem trainierten Klassifizierungs-ML-Modell (120) oder dem trainierten Regressions-ML-Modell (120) ein trainiertes neuronales Netz, NN, umfasst.

9. Verfahren nach Anspruch 1, wobei das eine von der Klassifizierung oder der Regression unter Verwendung eines jeweiligen von einem Klassifizierungsblock oder einem Regressionsblock des mindestens einen ML-Modells (120) durchgeführt wird und wobei das mindestens eine ML-Modell (120), das den jeweiligen von dem Klassifizierungsblock oder dem Regressionsblock und das trainierte NN beinhaltet, unter Verwendung von Ende-zu-Ende-Lernen trainiert wird.

10. System (100), umfassend eine Verarbeitungshardware (104) und einen Speicher (106), in dem ein Softwarecode (110) gespeichert ist, **dadurch gekennzeichnet, dass**:
die Verarbeitungshardware (104) dazu ausgelegt ist, den Softwarecode (110) auszuführen, um das Verfahren nach einem der Ansprüche 1 bis 9 durchzuführen.

## Revendications

1. Procédé destiné à être utilisé avec au moins un modèle d'apprentissage automatique, ML (120) entraîné à l'aide d'un apprentissage contrastif basé sur une métrique de similarité, afin de mapper chacun d'une pluralité de segments vidéo (224) à un plongement respectif (240, 352) dans un espace vectoriel continu (350), dans lequel la métrique de similarité est une métrique d'encodage vidéo, et le modèle ML (120) est entraîné pour étiqueter une paire de segments vidéo (224) comme semblables sur la base du fait qu'ils ont tous deux réalisé de bons résultats avec un schéma d'encodage particulier, et comme dissemblables sur la base du fait qu'ils ont tous deux réalisé de bons résultats avec des schémas d'encodage différents,
le procédé comprenant :
la réception d'une entrée (128) incluant la pluralité de segments vidéo (224) ;
le mappage, à l'aide de l'au moins un modèle d'apprentissage automatique (120), de chacun de la pluralité de segments vidéo (224) avec le plongement respectif (240, 352) dans l'espace vectoriel continu (350) afin de fournir une pluralité de plongements mappés (240, 352) correspondant respectivement à la pluralité de segments vidéo (224) ;
la réalisation de l'une d'une classification ou d'une régression de la pluralité de segments vidéo (224) à l'aide de la pluralité de plongements mappés (240, 352) ;
le classement, sur la base de l'une de la classification ou de la régression, de la pluralité de segments vidéo (224) en une catégorie de contenu vidéo parmi une pluralité de catégories de contenu vidéo en fonction de la métrique de similarité ;
la détermination d'un schéma d'encodage correspondant à la catégorie de contenu vidéo ; et
l'encodage de la pluralité de segments vidéo (224) à l'aide du schéma d'encodage.

2. Procédé selon la revendication 1, dans lequel la classification comprend le regroupement de chacun d'au moins un de la pluralité de plongements mappés (240, 352) en une ou plusieurs grappes (354) correspondant chacune respectivement à une catégorie distincte de la métrique de similarité.

3. Procédé selon la revendication 2, comprenant en outre :
la sélection, sur la base de la catégorie de contenu vidéo, d'un algorithme de prétraitement pour prétraiter la pluralité de segments vidéo (224) ; et
le prétraitement de la pluralité de segments vidéo (224) à l'aide de l'algorithme de prétraitement sélectionné.

4. Procédé selon la revendication 1, dans lequel l'au moins un modèle ML (120) comprend au moins l'un d'un réseau neuronal convolutif unidimensionnel, d'un réseau neuronal convolutif bidimensionnel ou d'un réseau neuronal convolutif tridimensionnel.

5. Procédé selon la revendication 1, dans lequel l'espace vectoriel continu (350) est multidimensionnel.

6. Procédé selon la revendication 1, dans lequel la métrique de similarité comprend l'une d'une métrique de similarité quantitative et d'une métrique de similarité perceptuelle.

7. Procédé selon la revendication 1, dans lequel l'une de la classification ou de la régression est réalisée à l'aide d'un modèle respectif d'un modèle ML de classification entraîné (120) ou d'un modèle ML de régression entraîné (120), et dans lequel l'au moins un modèle ML (120) et le modèle respectif du modèle ML de classification entraîné (120) ou du modèle ML de régression entraîné (120) sont entraînés indépendamment l'un de l'autre.

8. Procédé selon la revendication 1, dans lequel l'une de la classification ou de la régression est réalisée à l'aide d'un modèle respectif d'un modèle ML de classification entraîné (120) ou d'un modèle ML de régression entraîné (120), et dans lequel le modèle respectif du modèle ML de classification entraîné (120) ou du modèle ML de régression entraîné (120) comprend un réseau neuronal entraîné, NN.

9. Procédé selon la revendication 1, dans lequel l'une de la classification et de la régression est réalisée à l'aide d'un bloc respectif d'un bloc de classification ou d'un bloc de régression de l'au moins un modèle ML (120), et dans lequel l'au moins un modèle ML (120) incluant le bloc respectif du bloc de classification ou du bloc de régression et le NN entraîné est entraîné à l'aide d'un apprentissage de bout en bout.

10. Système (100) comprenant un matériel de traitement (104) et une mémoire (106) stockant un code logiciel (110), **caractérisé par** :
le matériel de traitement (104) étant adapté pour exécuter le code logiciel (110) afin de réaliser le procédé de l'une quelconque des revendications 1 à 9.
